# EUROPEAN PATENT SPECIFICATION

(11) **EP 1 540 833 B1**
(45) Date of publication and mention of the grant of the patent: **14.02.2007**
(21) Application number: 03795011.0
(22) Date of filing: 10.09.2003
(51) Int. Cl.: H04B 1/18, H04B 1/40

(54) **EMISSION DEVICE INTENDED TO BE COUPLED WITH A RECEPTION DEVICE**
SENDEGERÄT FÜR KOPPLUNG EINES EMPFANGSGERÄTES
DISPOSITIF D'EMISSION DESTINE A ETRE COUPLE A UN DISPOSITIF DE RECEPTION

(30) Priority: 16.09.2002 FR 0211531
(43) Date of publication of application: 15.06.2005
(73) Proprietor: Thomson Licensing, 92100 Boulogne-Billancourt (FR)
(72) Inventor: CHAMBELIN, Philippe, F-35410 CHATEAUGIRON (FR); LO HINE TONG, Dominique, F-35700 RENNES (FR); LE NAOUR, Jean-Yves, F-35740 PACE (FR)
(74) Representative: Ruellan-Lemonnier, Brigitte
(86) International application number: PCT/EP2003/010106
(87) International publication number: WO 2004/025845

(56) References cited:
- WO-A-00/03494
- US-B1- 6 366 620

## Description

The invention concerns an emission device intended to be coupled with a reception device. More particularly, the invention supplements an already existing reception device.

At present, the broadcasting of programmes by satellite is widely used across the world. Numerous devices are installed at millions of users' homes. The devices installed are mostly reception devices which comprise an outside unit including a parabolic reflector which focuses the waves onto the horn of an LNB (standing for: Low Noise Block), the LNB transforming the waves received into an electrical signal in an intermediate satellite band so as to transmit them, by way of a coaxial cable, to an inside unit commonly referred to as a satellite decoder or STB (standing for: Set Top Box).

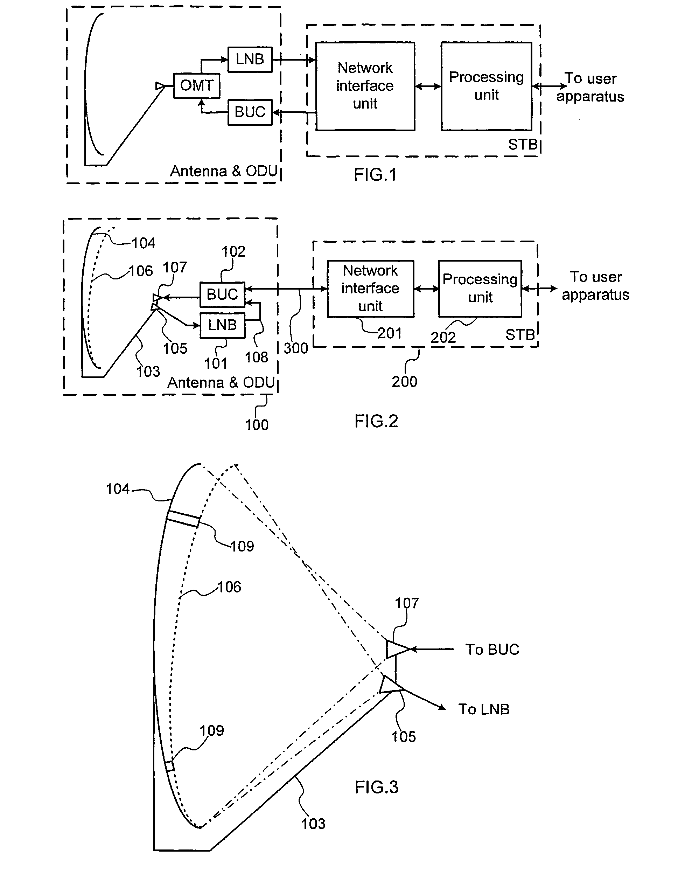

In the near future, satellite transmissions destined for the mass market will become bi-directional. For professional uses, it is known to resort to devices that include a parabolic dish which focuses the waves onto a horn furnished with a waveguide means which separates the waves emitted and the waves received on two waveguides. One of the guides is connected to an LNB for reception. The other of the guides is connected to a BUC (standing for: Block Up Converter) for emission. Two coaxial cables link the LNB on the one hand and the BUC on the other hand to an STB, as shown in Figure 1. There also exist emission/reception terrestrial transmission networks operating with a single coaxial cable, but these networks are not compatible with conventional satellite reception systems.

Document US 6 366 620 discloses a system for generating and transmitting a modulated data signal to a satellite. It includes a multiplexer 222 to connect a reception part (LNB) and an emission part (229-231) to a coaxial cable IFL (13). But the transformation of the devices already operational at users' homes requires in view of the presently known techniques a complete change of the previously purchased equipment. The replacing of the entire equipment is relatively expensive and it is preferable to resort to a supplementary system which makes it possible to add an accessory more cheaply, making it possible to transform the already-installed reception system into an emission and reception system.

For this purpose, the invention proposes a BUC to be hooked up with an LNB which comprises an additional input/output for being connected to the LNB and appropriate filtering means.

Thus, the invention is a radio wave emission block which receives via a first input/output terminal electrical signals to be emitted as well as its power supply, the first terminal being intended to receive a first coaxial cable, the said electrical signals being situated in an intermediate emission frequency band, the said block transposes the said electrical signals into an emission frequency band then amplifies them and transforms them into a wave to be emitted. The emission block comprises a second input/output terminal electrically linked to the first input/output terminal by way of a band rejection filter which rejects the intermediate emission frequency band, the second terminal being intended to receive a second coaxial cable.

The invention is more generally a tranmission device comprising a reception block which transposes waves received into electrical signals situated in an intermediate reception frequency band, the reception block having an input/output terminal for receiving a coaxial cable so as to transmit the electrical signals to an inside unit and to receive its power supply, a first coaxial cable connected at one end to an inside unit, an emission block as indicated above, the first input/output terminal of the emission block being connected to the first coaxial cable, and a second coaxial cable connected on the one hand to the second input/output terminal of the emission block and on the other hand to the input/output terminal of the reception block.

The invention will be better understood, and other features and advantages will become apparent on reading the description which follows, the description making reference to the appended drawings among which:
Figure 1 represents a bi-directional satellite transmission system according to the state of the art;
Figure 2 represents a bi-directional transmission system according to the invention;
Figure 3 details the antenna elements of Figure 2;
Figure 4 represents a variant antenna according to the invention;
Figures 5 and 6 detail the filtering element which deflects the emission and reception waves;
Figure 7 shows the modification of the BUC according to the invention.

Figure 2 represents a bi-directional transmission system based on a conventional satellite reception installation according to the invention. The system comprises an outside unit 100 linked by a cable 300 to an inside unit 200.

The inside unit comprises a network interface unit 201 and a processing unit 202. The network interface unit 201 includes the demodulation and decoding functions which make it possible to transform the data received in intermediate satellite band into a train of bits that can be understood by the processing unit 202 which transforms them into data tailored for a user apparatus (not represented). The network interface unit 201 also includes coding and modulation means for transforming a train of bits to be emitted originating from the processing unit 202 into signals placed in an intermediate emission frequency band. Supply and control means situated inside the interface unit 201 provide a supply voltage and control or reference signals to the outside unit. All the signals received or emitted by the network interface unit 201 are exchanged with the outside unit 100 via the coaxial cable 300, the coupling being effected by way of known duplexers.

The outside unit comprises an LNB 101, a BUC 102, an antenna support 103, a reflector 104 which focuses the waves onto a source which is for example a horn 107 of the BUC 102, a semi-reflector 106 which focuses the waves onto a source which is for example a horn 105 of the LNB 101. The LNB 101 is connected to the BUC 102 by way of a coaxial cable 108.

Figure 3 details the antenna part of Figure 2. The reflector 104 is a parabolic reflector, such as commonly used for satellite receivers, which focuses the waves originating from a satellite pointed by the reflector 104 onto the horn 107 of the BUC 102. The semi-reflector 106 is of parabolic shape with a different focal point from that of the reflector 104 so as to place the horn 105 of the LNB 101 alongside the horn 107 of the BUC 102. The semi-reflector 106 is fixed mechanically on the reflector 104 with the aid of a known technique, for example with the aid of screws and brackets 109. The semi-reflector 106 has the property of allowing through the wave range corresponding to the signals received by the LNB 101 and of reflecting the signals emitted by the BUC.

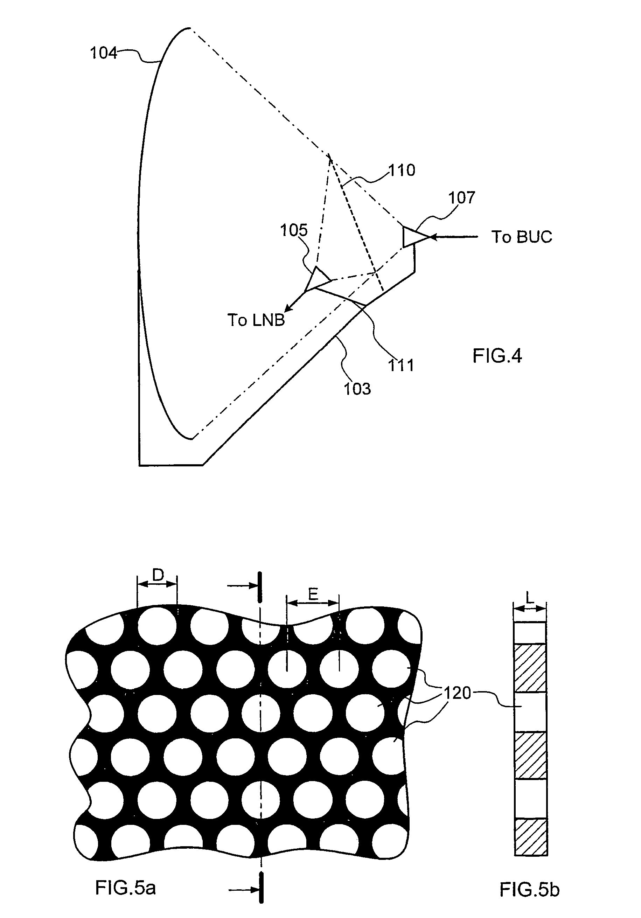

Figure 4 depicts a variant in which use is made of a plane semi-reflector 110 placed between the horn 107 of the BUC 102 and the reflector 104 so that the focused waves are deflected towards the horn 105 of the LNB 101 which is for example placed facing the BUC 102. This embodiment requires the addition of an arm 111 on the antenna support 103.

The embodiments of Figures 3 and 4 have various advantages and drawbacks. The main advantage common to both embodiments is that of allowing the elements necessary for emission to be added directly to the existing antenna. On the other hand, all of the waves reflected by the reflector 104 originating from the horn 107 are attenuated twice by the semi-reflector 106. The waves received by the horn 107 are attenuated less by the semi-reflector 110 but on the other hand the latter reflects totally part of the waves emitted by the horn 105 after reflection off the reflector 104.

Figure 5 represents an exemplary embodiment of the semi-reflector 106 or 110. Figure 5a shows a partial front view of the semi-reflector and Figure 5b shows a sectional view along the axis A-A. The semi-reflector is here a thick grid which comprises holes 120 and which behaves as a waveguide and undertakes a high-pass type filtering function. Each hole having a diameter D and a length L, the grid allows through waves whose wavelength is less than λ_{c} = 3.413 D/2 and reflects waves of higher wavelength, the length L being fixed to ensure a waveguide of minimum length. Thus, with the LNB it is possible to receive the existing satellite channels in Ku band that lie for example between 10.7 and 12.75 GHz and to have for example a satellite-based return path either in Ku band between 13.75 and 14.5 GHz or in Ka band between 29.5 and 30 GHz.

A spacing E is chosen in such a way as to have the holes as close together as possible so as to reduce to the minimum the attenuation of the semi-reflector on the waves passing through it. This type of semi-reflector is useful with any type of wave: unpolarized, or vertically, horizontally or circularly polarized.

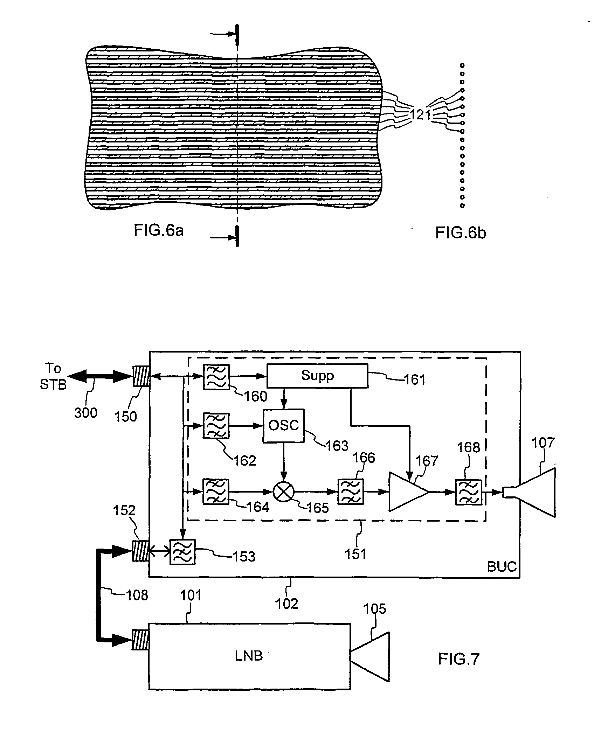

Figure 6 represents a semi-reflector variant which behaves as a polarized filter. Figure 6a shows the semi-reflector face on and Figure 6b shows a sectional view along the axis B-B. Here, a grid is made with the aid of a plurality of metal wires 121 arranged in parallel. The metal wires 121 are either stretched in a frame, or moulded in a plastic transparent to the relevant radio waves. With such a solution, a single polarization is used for reception and the other polarization is used for emission.

Figure 7 shows a BUC 102 which makes it possible to interconnect the LNB 101. The BUC 102 comprises a first input/output terminal 150 intended to receive the coaxial cable 300, transposition and amplification means 151, a second input/output terminal 152 intended to receive the coaxial cable 108, and a band rejection filter 153 placed between the first terminal 150 and the second terminal 152. The filter 153 rejects the frequency band corresponding to the intermediate emission band.

The signals conveyed by the cable 300 are signals in the satellite intermediate frequency band for reception, lying between 950 and 2150 MHz, the supply to the LNB and to the BUC which is effected with the aid of one and the same DC component, for example 27 V, the control signals for the LNB that lie in a frequency band situated at around 22 kHz (DiSEqC standard), a reference signal for synchronizing the oscillators which is placed for example at the frequency of 10 MHz, and the intermediate emission frequency band signals that are for example placed between 819 and 834 MHz. The band rejection filter 153 suppresses the band lying between 819 and 834 MHz on the cable 108 so as not to disturb the LNB which is not normally designed to reject frequencies so close to the satellite intermediate band for reception.

The means 151 are of a conventional type. A low-pass filter 160 recovers the DC component and feeds it to a supply circuit 161 which supplies the active circuits of the BUC. A narrow-band filter 162 recovers the reference signal and feeds it to an oscillator 163 which provides a frequency transposition signal equal for example to 12.94 GHz. A band-pass filter 164 recovers the intermediate emission frequency band and feeds it to a mixer 165 which mixes this band with the transposition signal. A band-pass filter 166 connected to the output of the mixer 165 selects the image band situated for example between 13.759 and 13.774 GHz. An amplifier 167 amplifies the signal to be emitted. A band-pass filter 168 performs a last filtering of the frequency band to be emitted, then the signal is transmitted to the horn 107 by way of a transition according to a known technique, the horn 107 emitting waves towards the reflector 104.

Other variants of the invention are possible. The embodiments described show the use of a semi-reflector to reflect the waves received. It is possible to invert the LNB and the BUC either with the aid of a polarized semi-reflector, or with the aid of a semi-reflector undertaking a filtering function of low-pass type on the waves.

## Claims

1. Radio wave emission block (102) which receives via a first input/output terminal (150) electrical signals to be emitted as well as its power supply, the first terminal being intended to receive a first coaxial cable (300), the said electrical signals being situated in an intermediate emission frequency band, the said block transposes the said electrical signals into an emission frequency band then amplifies them and transforms them into a wave to be emitted, **characterized in that** it furthermore comprises a second input/output terminal (152) electrically linked to the first input/output terminal (150) by way of a band rejection filter (153) which rejects the intermediate emission frequency band, the second terminal being intended to receive a second coaxial cable (108) from a seperate reception block (101).

2. Transmission device comprising:
- a reception block (101) which transposes waves received into electrical signals situated in an intermediate reception frequency band, the reception block having an input/output terminal for receiving a coaxial cable so as to transmit the electrical signals to an inside unit and to receive its power supply,
- a first coaxial cable (300) connected at one end to an inside unit (200),
**characterized in that** it furthermore comprises:
- an emission block (102) according to Claim 1, the first input/output terminal (150) of the emission block being connected to the first coaxial cable (300),
- a second coaxial cable (108) connected on the one hand to the second input/output terminal (152) of the emission block (102) and on the other hand to the input/output terminal of the reception block (101).

## Patentansprüche

1. Radiowellen-Sendeblock (102), der über einen ersten Eingangs-/Ausgangsanschluss (150) zu sendende elektrische Signale sowie seine Leistungsversorgung empfängt, wobei der erste Anschluss ein erstes Koaxialkabel (300) aufnehmen soll, die elektrischen Signale in einem Sende-Zwischenfrequenzband liegen und der Block die elektrischen Signale in ein Sende-Frequenzband umsetzt, anschließend verstärkt und sie dann in eine zu sendende Welle transformiert, **dadurch gekennzeichnet, dass** er ferner einen zweiten Eingangs-/Ausgangsanschluss (152) besitzt, der mit dem ersten Eingangs-/Ausgangsanschluss (150) über ein Bandsperrfilter (153) elektrisch verbunden ist, das das Sende-Zwischenfrequenzband sperrt, wobei der zweite Anschluss ein zweites Koaxialkabel (108) von einem separaten Empfangsblock (101) aufnehmen soll.

2. Übertragungsvorrichtung, die enthält:
- einen Empfangsblock (101), der empfangene Wellen in elektrische Signale umsetzt, die in einem Empfangs-Zwischenfrequenzband liegen, wobei der Empfangsblock einen Eingangs-/Ausgangsanschluss besitzt, um ein Koaxialkabel aufzunehmen, um die elektrischen Signale zu einer Inneneinheit zu senden und um seine Leistungsversorgung zu empfangen,
- ein erstes Koaxialkabel (300), das an einem Ende mit einer Inneneinheit (200) verbunden ist,
**dadurch gekennzeichnet, dass** sie ferner umfasst:
- einen Sendeblock (102) nach Anspruch 1, wobei der erste Eingangs-/Ausgangsanschluss (150) des Sendeblocks mit dem ersten Koaxialkabel (300) verbunden ist, und
- ein zweites Koaxialkabel (108), das einerseits mit dem zweiten Eingangs-/Ausgangsanschluss (152) des Sendeblocks (102) und andererseits mit dem Eingangs-/Ausgangsanschluss des Empfangsblocks (101) verbunden ist.

## Revendications

1. Bloc d'émission d'ondes radio (102) qui reçoit par une première borne d'entrée/sortie 150 des signaux électriques à émettre ainsi que son alimentation électrique, la première borne étant destinée à recevoir un câble coaxial (300), lesdits signaux électriques étant situés dans une bande de fréquence intermédiaire d'émission, ledit bloc transpose lesdits signaux électriques dans une bande de fréquences d'émission puis les amplifie et les transforme en onde à émettre, **caractérisé en ce qu'**il comporte en outre une deuxième borne d'entrée/sortie (152) électriquement reliée à la première borne d'entrée/sortie (150) par l'intermédiaire d'un filtre réjecteur de bande (153) qui rejette la bande de fréquences intermédiaire d'émission, la deuxième borne (152) devant recevoir un deuxième câble coaxial (108) issu d'un bloc de réception séparé (101).

2. Dispositif de transmission comportant
- un bloc de réception (101) qui transpose des ondes reçues en signaux électriques situés dans une bande de fréquences intermédiaire de réception, le bloc de réception disposant d'une borne d'entrée/sortie pour recevoir un câble coaxial afin de transmettre les signaux électriques à une unité intérieure et de recevoir son alimentation électrique,
- un premier câble coaxial (300) connecté à une extrémité à une unité intérieure (200)
**caractérisé en ce qu'**il comporte en outre :
- un bloc d'émission (102) selon la revendication 1, la première borne d'entrée/sortie (150) du bloc d'émission étant connectée au premier câble coaxial (300),
- un deuxième câble coaxial (108) connecté d'une part à la deuxième borne d'entrée/sortie (152) du bloc d'émission (102) et d'autre part à la borne d'entrée/sortie du bloc de réception (101).
